# EUROPÄISCHE PATENTSCHRIFT

(11) **EP 4 674 649 B1**
(45) Veröffentlichungstag und Bekanntmachung des Hinweises auf die Patenterteilung: **23.09.2026**
(21) Anmeldenummer: 24186262.2
(22) Anmeldetag: 03.07.2024
(51) Int. Cl.: B60G 7/00, B62D 17/00

(54) **LENKER FÜR EINE RADAUFHÄNGUNG IN EINEM KRAFTFAHRZEUG**
LINK FOR A WHEEL SUSPENSION IN A MOTOR VEHICLE
BRAS DE SUSPENSION POUR VÉHICULE AUTOMOBILE

(43) Veröffentlichungstag der Anmeldung: 07.01.2026
(73) Patentinhaber: Benteler Automobiltechnik GmbH, 33102 Paderborn (DE)
(72) Erfinder: HUMMELT, Jürgen, 33100 Paderborn (DE); MEYER, Stephan, 33605 Bielefeld (DE)
(74) Vertreter: Ksoll, Peter

(56) Entgegenhaltungen:
- EP-A1- 4 378 718
- DE-A1- 102013 015 184
- US-B2- 11 421 723

## Beschreibung

Die Erfindung betrifft einen Lenker für eine Radaufhängung in einem Kraftfahrzeug mit einem Lenkerkörper aus Leichtmetall, insbesondere Aluminium, welcher zwei Seitenwände aufweist, wobei in zumindest einer Seitenwand ein Langloch vorgesehen ist, welches dafür eingerichtet und bestimmt ist, mit einer Exzenterverstelleinrichtung zusammen zu wirken.

Lenker sind Komponenten der Radaufhängung eines Kraftfahrzeugs. Die Lenker müssen hohe Kräfte aufnehmen, insbesondere Brems- und Antriebskräfte. Zusätzlich stützen die Lenker im Zusammenwirken mit weiteren Fahrwerkskomponenten das Gewicht eines Kraftfahrzeugs ab.

Über eine Exzenterverstelleinrichtung, die üblicherweise Exzenterelemente, wie Exzenterscheiben und Exzenterschrauben und/oder Steuerelemente aufweist, kann eine Ausrichtung eines Lenkers relativ zur radträgerseitigen Anbindung erfolgen. Auf diese Weise können Fahrzeugtoleranzen ausgeglichen sowie Spur und/oder Sturz der Räder eines Kraftfahrzeugs eingestellt werden. Die Exzenterverstelleinrichtung wirkt mit Langlöchern in den Seitenwänden des Lenkers zusammen.

Zum Stand der Technik zählen Ausführungsformen von Lenkern mit Exzenterverstelleinrichtungen wie in der DE 10 2017 200 675 A1, der DE 10 2019 002 874 A1 oder der EP 4 360 919 A1 offenbart.

Um ein möglichst geringes Bauteilgewicht zu erreichen, werden die Lenkerkörper der Lenker aus Leichtmetall bzw. einer Leichtmetalllegierung gefertigt, insbesondere aus Aluminium der 5000er Serie bis der 7000er Serie.

Lenkerkörper aus Leichtmetall sind vorteilhaft im Gewicht. Allerdings sind die Bauteile auch anfällig hinsichtlich Beschädigungen bzw. Verschleiß aufgrund der hohen im Betrieb wirkenden Kräfte und Momente. Auch können die Lenkerkörper bei der Montage oder den Einstellvorgängen für den Spur- und Sturzwinkel beschädigt werden. Insbesondere durch das Einstellen des Sturzes unter Belastung bei der das Fahrzeug während der Einstellung auf den Rädern steht, kann der Bolzen bzw. die Schraube der Exzenterverstellvorrichtung im Langloch und den benachbarten Bereichen der Seitenwand des Lenkerkörpers reiben oder sich eingraben, woraus Verformungen und Beschädigungen resultieren können.

Die DE 10 2013 015 184 A1 offenbart einen Lenker gemäß dem Oberbegriff des Anspruchs 1 und beschreibt eine faserverstärkte Versteifungsstrebe mit einem Langloch, in welchem eine Buchse angeordnet ist.

Die EP 4 378 718 A1 offenbart einen gattungsbildenden Lenker für eine Radaufhängung in einem Kraftfahrzeug.

Weiterer Stand der Technik wird durch die US 11 421 723 B2 gebildet, welche eine Verstärkungsstruktur für eine in einem Aluminiumbauteil angeordnete Durchgangsöffnung offenbart.

Der Erfindung liegt ausgehend vom Stand der Technik die Aufgabe zugrunde, einen funktional verbesserten Lenker zu schaffen, mit einem höheren Verschleißschutz im Bereich der Anbindung eines Exzenterverstellvorrichtung an bzw. in den Seitenwänden des Lenkerkörpers.

Die Lösung dieser Aufgabe besteht in einem Lenker gemäß Anspruch 1. Vorteilhafte Ausgestaltungen und Weiterbildungen des erfindungsgemäßen Lenkers sind Gegenstand der abhängigen Ansprüche.

Ausgestaltungen und Modifikationen von Merkmalen des erfindungsgemäßen Lenkers, die einzeln oder in Kombination die Erfindung in technisch vorteilhafter Weise ausgestalten oder weiterbilden, ergeben sich auch aus der Beschreibung und den beigefügten Zeichnungen.

Ein erfindungsgemäßer Lenker für eine Radaufhängung in einem Kraftfahrzeug weist einen Lenkerkörper auf. Der Lenkerkörper besteht vorzugsweise aus Leichtmetall, insbesondere aus Aluminium bzw. einer Aluminiumlegierung der 5000er Serie bis 7000er Serie.

Der Lenkerkörper kann auch aus einem Faserverbundkunststoff (FVK) bestehen. Hierbei kommen Faserverbundkunststoffe zur Anwendung mit hoher spezifischer Steifigkeit und Festigkeit, die auf dem Niveau von Aluminiumlegierungen oder hochfesten Stählen liegen.

Der Lenkerkörper besitzt zwei, insbesondere zueinander parallele Seitenwände. In zumindest einer Seitenwand ist ein Langloch vorgesehen. Das Langloch ist dafür eingerichtet und bestimmt, mit einer Exzenterverstelleinrichtung zusammenzuwirken. Mittels der Exzenterverstellvorrichtung kann die relative Lage des Lenkers zur Radaufhängung bestimmt und der Sturzwinkel eingestellt werden. Die Einstellung der Spur erfolgt passiv über den Sturzwinkel.

Der Lenkerkörper kann ein Guss-, Schmiede- oder Extrusionsteil sein.

Erfindungsgemäß ist zumindest ein Wandabschnitt einer Innenwand des zumindest einen Langlochs durch ein Verstärkungselement gebildet, wobei das Verstärkungselement aus einem Werkstoff besteht, der eine höhere Härte besitzt als der Werkstoff der Seitenwand des Lenkerkörpers.

Links und rechts des Langlochs sind Exzenteranschläge angeordnet. Das Verstärkungselement bzw. der Werkstoff aus dem das Verstärkungselement gebildet ist, weist auch eine höhere Härte auf als die Exzenteranschläge, insbesondere sind die Exzenteranschläge werkstoffeinheitlich einstückig in bzw. aus einer Seitenwand des Lenkerkörpers ausgebildet.

Das Verstärkungselement ist als Einsatz in der Seitenwand des Lenkerkörpers ausgeführt und lokal im belasteten Bereich der Verbindung zwischen der Exzenterverstelleinrichtung und dem Lenkerkörper angeordnet. Durch die lokale Anordnung des Verstärkungselements ist eine Gewichts- und Materialreduktion möglich, wodurch Resourcen geschont werden können.

Das Verstärkungselement ist gegenüber dem Material des Lenkerkörpers bzw. der Seitenwand des Lenkerkörpers härter und auch fester. Durch das Verstärkungselement wird gezielt und lokal im Langloch ein Wandabschnitt gebildet, der dem mechanischen Eindringen des Bolzens der Exzenterverstelleinrichtung einen wesentlich höheren mechanischen Widerstand entgegensetzt als der Werkstoff der Seitenwand des Lenkerkörpers.

Ein Verstärkungselement verstärkt das Langloch zumindest einseitig. Es können auch mehrere Verstärkungselemente vorgesehen sein, beispielsweise zwei Verstärkungselemente an sich gegenüberliegenden Wandabschnitten der Innenwand des Langlochs. Vorzugsweise ist das Verstärkungselement an bzw. in der oberen Längsseite des Langlochs vorgesehen. Grundsätzlich ist es möglich, dass ein Verstärkungselement an der oberen Längsseite und/oder an der unteren Längsseite und/oder an einer oder beiden Schmalseiten des Langlochs angeordnet sein kann.

Im Zusammenhang mit der Härte ist Rockwell eine international gebräuchliche Maßeinheit für die Härte eines Werkstoffes. Die Härte kann auch nach Vickers bzw. der Vickers Härteprüfung bestimmt werden.

Der Werkstoff des Verstärkungselements weist des Weiteren eine höhere Festigkeit gegenüber dem Werkstoff des Lenkerkörpers bzw. der Seitenwand des Lenkerkörpers auf. Folglich besitzt das Verstärkungselement auch eine höhere Widerstandsfähigkeit gegenüber Verformungen als der benachbarte Bereich der Seitenwand des Lenkerkörpers.

Vorzugsweise besteht das Verstärkungselement aus Stahl bzw. einer Stahllegierung.

Das Verstärkungselement besteht aus einem Werkstoff, der eine Härte besitzt, die härter oder gleich hart ist wie der Bolzen bzw. eine Schraube der Exzenterverstelleinrichtung, die durch das Langloch in der Seitenwand geführt ist und am verstärkten Wandabschnitt bzw. dem Verstärkungselement anliegt.

Der Lenkerkörper besteht insbesondere aus Aluminium oder einer Aluminiumlegierung. Dementsprechend sind auch die zwei Seitenwände des Lenkerkörpers aus Aluminium bzw. einer Aluminiumlegierung.

Der Lenkerkörper kann ein Strangpressprofil sein bzw. aus einem Strangpressprofil gebildet sein.

Der Lenkerkörper kann auch ein Schmiede- oder Gussbauteil sein.

Erfindungsgemäß ist das Verstärkungselement in einer an das Langloch angrenzenden Ausnehmung in der Seitenwand des Lenkerkörpers angeordnet. Vorzugsweise weist die Ausnehmung eine Breite auf, die der Wandstärke der Seitenwand des Lenkerkörpers entspricht. Das Verstärkungselement weist folglich eine Breite auf, die gleich bzw. im Wesentlichen gleich der Wandstärke der Seitenwand ist.

Ein Langloch besitzt eine Länge, die dem Durchmesser eines durch das Langloch geführten Exzenterbolzen entspricht plus dem erforderlichen bzw. vorgegebenen Verstellweg für die Einstellung des Sturzes.

Eine Seitenwand des Lenkerkörpers weist eine Wandstärke von 3 mm bis 10 mm, insbesondere 3,5 mm bis 9 mm auf.

Die Ausnehmung für das Verstärkungselement bzw. den das Verstärkungselement bildenden Einsatz wird vorzugsweise beim Stanzen des Langloches in der Seitenwand hergestellt. Dementsprechend ist kein weiterer Arbeitsschritt notwendig.

Die Ausnehmung ist zum Langloch hin offen.

Das Verstärkungselement ist in die Ausnehmung eingesetzt und bildet einen Wandabschnitt der Innenwand des Langlochs.

Vorzugsweise ist das Verstärkungselement in die Ausnehmung in der Seitenwand des Lenkerkörpers eingepresst und pressgefügt. Die Fügung ist hochstabil und belastbar. Kräfte werden zuverlässig aufgenommen und übertragen. Der aus Leichtmetall bestehende Lenkerkörper und dessen Seitenwand ist durch das Verstärkungselement im Anbindungsbereich zwischen der Exzenterverstelleinrichtung und dem Lenkerkörper, insbesondere in dem Bereich, in welchem sich der Exzenterbolzen bzw. die Exzenterschraube der Exzenterverstellvorrichtung abstützt, vor Verschleiß und Beschädigungen geschützt.

Das Verstärkungselement weist erfindungsgemäß Formschlussflächen auf, welche mit Kontaktflächen der Ausnehmung zusammenwirken. Insbesondere sind die Kontaktflächen gegengleich zu den Formschlussflächen konfiguriert. Formschlussflächen können durch Schrägen oder Hinterschneidungen gebildet sein. Insbesondere kann das Verstärkungselement nach Art einer Schwalbenschwanzverbindung in die Ausnehmung eingefügt sein.

Vorzugsweise erstreckt sich das Verstärkungselement über die Länge einer Längsseite eines Langlochs. Insbesondere besitzt das Verstärkungselement eine Länge, die 80 % bis 100 % der Länge der Längsseite des Langlochs entspricht.

In Hochrichtung (z-Achse) des Lenkers ist das Verstärkungselement vorzugsweise an der oberen Längsseite der beiden parallel zueinander verlaufenden Längsseiten des Langlochs angeordnet.

Erfindungsgemäß ist in der Seitenwand mit Abstand zum Langloch zumindest ein Exzenteranschlag ausgebildet.

Insbesondere ist beidseitig der Schmalseite des Langlochs jeweils ein Exzenteranschlag vorgesehen. Der bzw. die Exzenteranschläge sind werkstoffeinheitlich und einstückig aus der Seitenwand ausgeformt. Die Ausformung ist nach außen ausgeformt.

Die Exzenteranschläge können umformtechnisch mittels eines Stempels bzw. Formwerkzeugs aus der Seitenwand geformt sein, insbesondere durch linearen Vorschub eines Stempels. Die Exzenteranschläge können so ausgeformt sein, dass sie innere zum Langloch weisende Anschlagflächen aufweisen, die in einem Winkel von 20° bis 80°, insbesondere 30° bis 60° zur Fläche der Seitenwand verlaufen. Die Exzenteranschläge können durch Kaltschmieden, Umformen oder durch Prägen geformt sein.

Der Exzenteranschlag bzw. die Exzenteranschläge sind vorzugsweise durch eine Ausformung in der Seitenwand gebildet, wobei die Ausformung eine Abstützfläche für eine Exzenterscheibe der Exzenterverstelleinrichtung aufweist und die Abstützfläche quer zur Längsachse des Langlochs ausgerichtet ist. Insbesondere ist jeweils benachbart zu den beiden Schmalseiten des Langlochs mit Abstand zum Langloch eine Ausformung vorgesehen, wobei sich die Abstützflächen der Ausformungen insbesondere orthogonal zur Längsachse des Langlochs erstrecken.

Eine weitere vorteilhafte Ausgestaltung sieht vor, dass das Verstärkungselement eine Oberflächenbeschichtung aufweist. Für die Praxis ist insbesondere eine Zink- oder eine Zinklamellenbeschichtung besonders gut geeignet. Selbstverständlich sind auch andere geeignete Beschichtungswerkstoffe möglich. Auch die Beschichtungswerkstoffe weisen eine höhere Härte auf als der Werkstoff des Lenkerkörpers bzw. der Seitenwand des Lenkerkörpers oder der Bolzen bzw. die Schraube einer Exzenterverstelleinrichtung.

Die Erfindung ist nachfolgend anhand in den Zeichnungen dargestellten Ausführungsbeispielen näher beschrieben. Es zeigen:
- Figur 1: einen erfindungsgemäßen Lenker in einer perspektivischen Darstellung;
- Figur 2: eine Ansicht auf den Lenker gemäß der Darstellung der Figur 1 in einer Ansicht von vorne;
- Figur 3: einen Ausschnitt aus einer Seitenwand des Lenkers;
- Figur 4: einen Ausschnitt aus einer Seitenwand eines Lenkerkörpers in einer Ansicht auf die Außenseite der Seitenwand im Bereich eines Langlochs und
- Figur 5: den Ausschnitt entsprechend der Darstellung von Figur 4 mit einer Ansicht auf die Innenseite der Seitenwand.

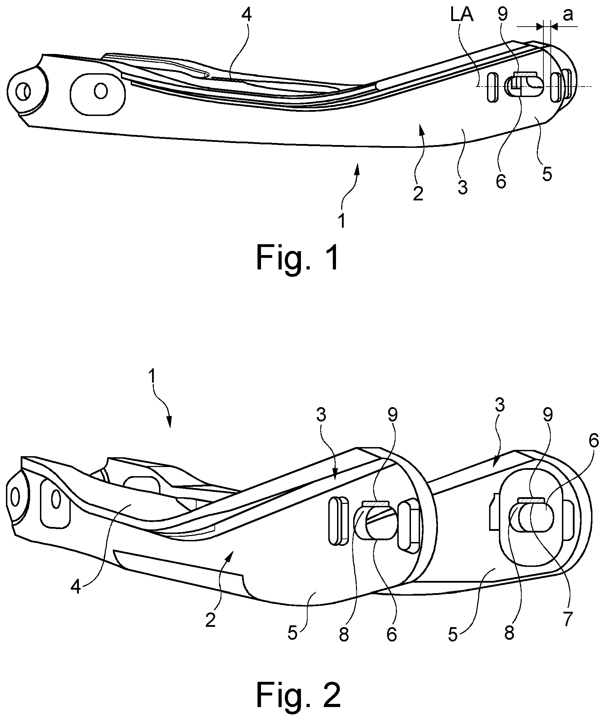

In den Figuren 1 und 2 ist ein Lenker 1 für eine Radaufhängung in einem Kraftfahrzeug dargestellt.

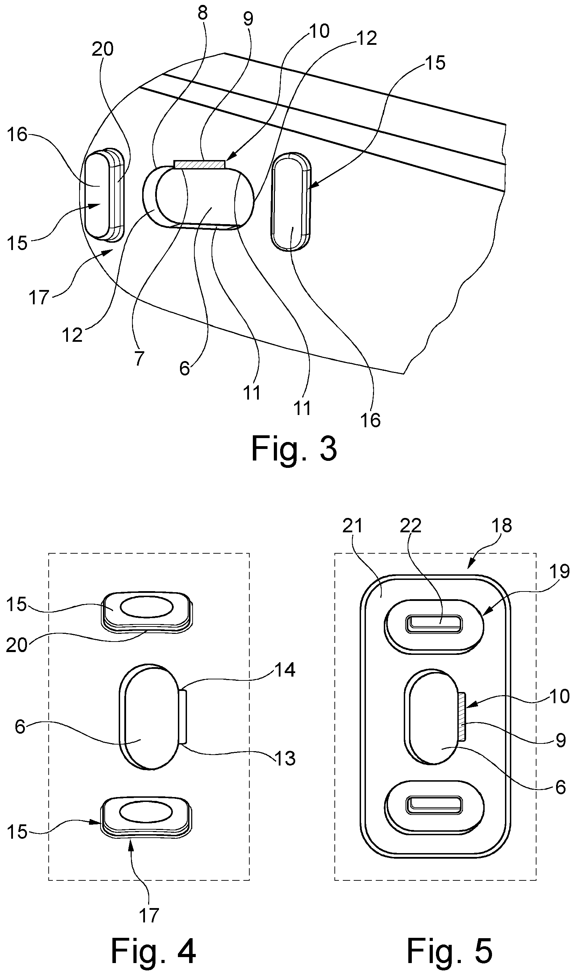

Figur 3 zeigt einen Ausschnitt des Lenkers 1.

Der Lenker 1 weist einen Lenkerkörper 2 aus einem Leichtmetallwerkstoff, insbesondere aus Aluminium bzw. einer Aluminiumlegierung der 5000er Serie bis 7000er Serie auf. Der Lenkerkörper 2 besitzt zwei zueinander parallele Seitenwände 3, welche durch eine obere Tragwand 4 miteinander verbunden sind.

In den radträgerseitigen Lagerabschnitten 5 einer Seitenwand 3 ist jeweils ein Langloch 6 vorgesehen. Jedes Langloch 6 erstreckt sich mit seiner Längsachse LA in Längsrichtung der Seitenwand 3 des Lenkerkörpers 2. Die Langlöcher 6 in den Seitenwänden 3 liegen einander gegenüber und sind koaxial zueinander angeordnet. Die Langlöcher 6 besitzen eine Breite, die dem Durchmesser eines durch ein Langloch 6 geführten Bolzens (Exzenterbolzens) entspricht plus einem technischen notwendigen Spiel. Die Länge eines Langlochs 6 beträgt ein Mehrfaches der Breite des Langlochs 6 bzw. des Durchmessers eines durch das Langloch 6 geführten Exzenterbolzens. Die Langlöcher 6 in den Seitenwänden 3 sind dafür eingerichtet und bestimmt mit einer Exzenterverstelleinrichtung zusammenzuwirken. Eine Exzenterverstelleinrichtung umfasst Stellelemente mit zylindrischen Verbindungelementen wie Schrauben oder Bolzen, die durch die Langlöcher 6 geführt werden. Mittels der Exzenterverstelleinrichtung kann die Lage und Position der radträgerseitigen Lagerabschnitte 5 der Seitenwand 2 und mit da dem Lenkerkörper 2 relativ zu einem Radträger eingestellt werden.

Jeweils ein Wandabschnitt 7 einer Innenwand 8 eines Langlochs 6 ist durch ein Verstärkungselement 9 gebildet. Das Verstärkungselement 9 besteht aus einem Werkstoff, der eine höhere Härte besitzt, als der Werkstoff der Seitenwand 3 des Lenkerkörpers 2. Der Werkstoff des Verstärkungselements 9 besitzt auch eine höhere Festigkeit, insbesondere eine höhere Zugfestigkeit als der Werkstoff des Lenkerkörpers 2 und den Bestandteil des Lenkerkörpers 2 bildenden Seitenwänden 3.

Das Verstärkungselement 9 besteht aus einem metallischen Werkstoff, insbesondere aus Stahl.

Der Werkstoff aus dem das Verstärkungselement 9 besteht, weist weiterhin eine höhere Festigkeit, insbesondere eine höhere Zugfestigkeit auf als der Leichtmetallwerkstoff des Lenkerkörpers 2 und der Seitenwände 3. Auch weist das Verstärkungselement 9 zumindest eine gleich hohe, insbesondere eine höhere Festigkeit auf als eine mit dem Langloch 6 zusammenwirkende Schraube bzw. Bolzen einer Exzenterverstelleinrichtung.

Ein Verstärkungselement 9 ist jeweils in eine an das Langloch 6 angrenzenden Ausnehmung 10 in einer Seitenwand 3 des Lenkerkörpers 2 angeordnet. Die Ausnehmung 10 erstreckt sich parallel zur Längsachse LA eines Langlochs 6 über die Länge einer Längsseite 11 des Langlochs 6. Zum Langloch 6 hin ist die Ausnehmung 10 offen. Das Langloch 6 ist als Einsatz ausgebildet, der in die Ausnehmung 10 eingepresst und pressgefügt ist. Ein Verstärkungselement 9 weist eine Länge auf, die im Wesentlichen der Länge der Längsseite 11 des Langlochs 6 entspricht. Die Länge des Verstärkungselements 9 ist größer als dessen in Hochrichtung der Seitenwand 3 gemessenen Dicke und größer als die quer dazu gemessene Breite.

Die Ausnehmung 10 durchsetzt eine Seitenwand 3 auf ihrer gesamten Breite. Das Verstärkungselement 9 ist in Hochrichtung des Lenkers 1 bezogen auf die z-Achse an der oberen Längsseite 11 der beiden parallel zueinander verlaufenden Längsseiten 11 des Langlochs 6 angeordnet. Die Längsseiten 11 gehen jeweils über halbkreisförmige Schmalseiten 12 ineinander über.

Vorzugsweise weist das Verstärkungselement 9 eine Oberflächenbeschichtung, insbesondere eine Zink- oder Zinklamellenbeschichtung auf.

Am Verstärkungselement 9 sind Formschlussflächen 13 ausgebildet, welche mit gegengleich konfigurierten Kontaktflächen 14 der Ausnehmung 10 zusammenwirken (siehe hierzu Figuren 4 und 5). Formschlussflächen 13 und Kontaktflächen 14 können durch Hinterschneidungen oder schwalbenschwanzartig aufeinander angepasste Schrägen gebildet sein.

In Längsrichtung des Langlochs 6 mit Abstand a benachbart zum Langloch 6 ist jeweils ein Exzenteranschlag 15 ausgebildet. Ein Exzenteranschlag 15 ist werkstoffeinheitlich einstückig durch eine Ausformung 16 in einer Seitenwand 3 gebildet. Zur Außenseite 17 einer Seitenwand 3 ist die Ausformung erhaben und steht gegenüber dieser vor. An der Innenseite 18 einer Seitenwand 3 weist die Ausformung 16 eine Vertiefung 19 auf (siehe hierzu auch Figuren 4 und 5). Jede Ausformung 16 weist eine Abstützfläche 20 für eine hier nicht dargestellte Exzenterscheibe einer Exzenterverstelleinrichtung auf. Die Abstützfläche 20 ist quer, insbesondere orthogonal, zur Längsachse LA eines Langlochs 6 ausgerichtet.

Insbesondere in der Figur 5 erkennt man, dass die Vertiefung 19 schalenförmig konfiguriert ist. Die Vertiefung 19 weist zwei unterschiedlich tiefe Schalenbereiche 21, 22 auf. Hierbei ist der mittlere bodenseitige Schalenabschnitt 22 tiefer ausgeführt als der den mittleren Schalenabschnitt 22 umgebende äußere Schalenabschnitt 21.

### Bezugszeichen:

- 1 -: Lenker
- 2 -: Lenkerkörper
- 3 -: Seitenwand
- 4 -: Tragwand
- 5 -: Lagerabschnitt von 3
- 6 -: Langloch
- 7 -: Wandabschnitt
- 8 -: Innenwand von 6
- 9 -: Verstärkungselement
- 10 -: Ausnehmung
- 11 -: Längsseite von 6
- 12 -: Schmalseite von 6
- 13 -: Formschlussfläche
- 14 -: Kontaktfläche
- 15 -: Exzenteranschlag
- 16 -: Ausformung
- 17 -: Außenseite von 3
- 18 -: Innenseite von 3
- 19 -: Vertiefung
- 20 -: Abstützfläche
- 21 -: Schalenabschnitt
- 22 -: Schalenabschnitt

- a -: Abstand
- LA -: Längsachse von 3

## Patentansprüche

1. Lenker (1) für eine Radaufhängung in einem Kraftfahrzeug, mit einem Lenkerkörper (2), welcher zwei Seitenwände (3) aufweist, wobei in zumindest einer Seitenwand (3) der zwei Seitenwände (3) ein Langloch (6) vorgesehen ist, welches dafür eingerichtet und bestimmt ist mit einer Exzenterverstelleinrichtung zusammenzuwirken, wobei zumindest ein Wandabschnitt (7) einer Innenwand (8) des Langlochs (6) durch ein Verstärkungselement (9) gebildet ist, wobei das Verstärkungselement (9) aus einem Werkstoff besteht, der eine höhere Härte besitzt als der Werkstoff der Seitenwand (3) des Lenkerkörpers (2), wobei das Verstärkungselement (9) in einer an das Langloch (6) angrenzenden Ausnehmung (10) in der Seitenwand (3) des Lenkerkörpers (2) angeordnet ist, wobei das Verstärkungselement (9) Formschlussflächen (13) aufweist, welche mit Kontaktflächen (14) der Ausnehmung (10) zusammenwirken, **dadurch gekennzeichnet, dass** in der Seitenwand (3) mit Abstand (a) zum Langloch (6) zumindest ein Exzenteranschlag (15) ausgebildet ist.

2. Lenker (1) nach Anspruch 1, **dadurch gekennzeichnet, dass** das Verstärkungselement (9) in der Ausnehmung (10) pressgefügt ist.

3. Lenker (1) nach einem der Ansprüche 1 bis 2, **dadurch gekennzeichnet, dass** sich das Verstärkungselement (9) über zumindest 80 % der Länge einer Längsseite (11) des Langlochs (6) erstreckt.

4. Lenker (1) nach Anspruch 1,
**dadurch gekennzeichnet, dass** der
Exzenteranschlag (15) durch eine Ausformung (16) in der Seitenwand (3) gebildet ist, wobei die Ausformung (16) eine Abstützfläche (20) für eine Exzenterscheibe der Exzenterverstelleinrichung aufweist, wobei die Abstützfläche (20) quer zur Längsachse (LA) des Langlochs (6) ausgerichtet ist.

5. Lenker (1) nach einem der Ansprüche 1 bis 4, **dadurch gekennzeichnet, dass** der Lenkerkörper (2) aus Aluminium oder einer Aluminiumlegierung besteht.

6. Lenker (1) nach einem der Ansprüche 1 bis 5, **dadurch gekennzeichnet, dass** das Verstärkungselement (9) aus Stahl besteht.

7. Lenker (1) nach einem der Ansprüche 1 bis 6, **dadurch gekennzeichnet, dass** das Verstärkungselement (9) eine Oberflächenbeschichtung, insbesondere eine Zink- oder Zinklamellenschichtung, aufweist.

## Claims

1. Control arm (1) for a wheel suspension of a motor vehicle, comprising a control arm body (2) having two side walls (3), wherein an elongated hole (6) is provided in at least one of the two side walls (3), the elongated hole (6) being configured and intended to cooperate with an eccentric adjustment device, wherein at least one wall section (7) of an inner wall (8) of the elongated hole (6) is formed by a reinforcing element (9), wherein the reinforcing element (9) is made of a material having a higher hardness than the material of the side wall (3) of the control arm body (2), wherein the reinforcing element (9) is arranged in a recess (10) in the side wall (3) of the control arm body (2), the recess (10) adjoining the elongated hole (6), wherein the reinforcing element (9) has positive-locking surfaces (13) which cooperate with contact surfaces (14) of the recess (10), **characterized in that** at least one eccentric stop (15) is formed in the side wall (3) at a distance (a) from the elongated hole (6).

2. Control arm (1) according to claim 1, **characterized in that** the reinforcing element (9) is press-fitted into the recess (10).

3. Control arm (1) according to any one of claims 1 and 2, **characterized in that** the reinforcing element (9) extends over at least 80% of the length of a longitudinal side (11) of the elongated hole (6).

4. Control arm (1) according to claim 1, **characterized in that** the eccentric stop (15) is formed by a projection (16) in the side wall (3), wherein the projection (16) has a support surface (20) for an eccentric disc of the eccentric adjustment device, wherein the support surface (20) is oriented transversely to the longitudinal axis (LA) of the elongated hole (6).

5. Control arm (1) according to any one of claims 1 to 4, **characterized in that** the control arm body (2) is made of aluminum or an aluminum alloy.

6. Control arm (1) according to any one of claims 1 to 5, **characterized in that** the reinforcing element (9) is made of steel.

7. Control arm (1) according to any one of claims 1 to 6, **characterized in that** the reinforcing element (9) has a surface coating, in particular a zinc coating or a zinc-flake coating.

## Revendications

1. Bras de suspension (1) destiné à une suspension de roue d'un véhicule automobile, comprenant un corps de bras de suspension (2) présentant deux parois latérales (3), au moins l'une des deux parois latérales (3) comportant un trou oblong (6), ledit trou oblong (6) étant configuré et destiné à coopérer avec un dispositif de réglage excentrique, au moins une section de paroi (7) d'une paroi intérieure (8) du trou oblong (6) étant formée par un élément de renforcement (9), l'élément de renforcement (9) étant constitué d'un matériau présentant une dureté supérieure à celle du matériau de la paroi latérale (3) du corps de bras de suspension (2), l'élément de renforcement (9) étant disposé dans un évidement (10) ménagé dans la paroi latérale (3) du corps de bras de suspension (2), l'évidement (10) étant adjacent au trou oblong (6), l'élément de renforcement (9) présentant des surfaces de verrouillage par complémentarité de forme (13) coopérant avec des surfaces de contact (14) de l'évidement (10), **caractérisé en ce qu'** au moins une butée d'excentrique (15) est formée dans la paroi latérale (3) à une distance (a) du trou oblong (6).

2. Bras de suspension (1) selon la revendication 1, **caractérisé en ce que** l'élément de renforcement (9) est emmanché à force dans l'évidement (10).

3. Bras de suspension (1) selon l'une quelconque des revendications 1 à 2, **caractérisé en ce que** l'élément de renforcement (9) s'étend sur au moins 80 % de la longueur d'un côté longitudinal (11) du trou oblong (6).

4. Bras de suspension (1) selon la revendication 1, **caractérisé en ce que** la butée d'excentrique (15) est formée par une saillie (16) dans la paroi latérale (3), la saillie (16) présentant une surface d'appui (20) destinée à un disque excentrique du dispositif de réglage excentrique, la surface d'appui (20) étant orientée transversalement par rapport à l'axe longitudinal (LA) du trou oblong (6).

5. Bras de suspension (1) selon l'une quelconque des revendications 1 à 4, **caractérisé en ce que** le corps du bras de suspension (2) est constitué d'aluminium ou d'un alliage d'aluminium.

6. Bras de suspension (1) selon l'une quelconque des revendications 1 à 5, **caractérisé en ce que** l'élément de renforcement (9) est constitué d'acier.

7. Bras de suspension (1) selon l'une quelconque des revendications 1 à 6, **caractérisé en ce que** l'élément de renforcement (9) présente un revêtement de surface, notamment un revêtement de zinc ou un revêtement à lamelles de zinc.
